# EUROPÄISCHE PATENTSCHRIFT

(11) **EP 3 511 590 B1**
(45) Veröffentlichungstag und Bekanntmachung des Hinweises auf die Patenterteilung: **10.03.2021**
(21) Anmeldenummer: 18214332.1
(22) Anmeldetag: 20.12.2018
(51) Int. Cl.: F16F 9/36

(54) **DICHTUNG UND DICHTUNGSANORDNUNG, DIE DIE DICHTUNG UMFASST**
SEAL AND SEAL ASSEMBLY COMPRISING THE SEAL
JOINT D'ÉTANCHÉITÉ ET DISPOSITIF D'ÉTANCHÉITÉ COMPRENANT LE JOINT D'ÉTANCHÉITÉ

(30) Priorität: 12.01.2018 DE 102018000181
(43) Veröffentlichungstag der Anmeldung: 17.07.2019
(73) Patentinhaber: Carl Freudenberg KG, 69469 Weinheim (DE)
(72) Erfinder: Emig, Jürgen, 64689 Grasellenbach (DE); Dixon, Ross, Newcastle Upon Tyne, Tyne and Wear, NE12 8NS (GB)

(56) Entgegenhaltungen:
- EP-A1- 1 909 002
- EP-A1- 2 116 738
- DE-A1- 19 930 964
- JP-A- 2011 158 035
- US-A- 2 797 938

## Beschreibung

### Technisches Gebiet

Die Erfindung betrifft eine Dichtung und eine Dichtungsanordnung, die die Dichtung umfasst, wobei die Dichtung einen Dichtring mit zumindest einer dynamisch beanspruchten Dichtlippe und einem Stützring aus einem zähharten Werkstoff umfasst, wobei der Dichtring und der Stützring miteinander verbunden sind, wobei der Stützring einen Radialschenkel umfasst, an dem in radialer Richtung einerseits die Dichtlippe festgelegt ist, wobei der Radialschenkel zweiteilig ausgebildet ist und einen in radialer Richtung einerseits angeordneten ersten Teilschenkel und einen in radialer Richtung andererseits angeordneten zweiten Teilschenkel aufweist, wobei sich die Teilschenkel mit einem ersten radialen Abstand benachbart zugeordnet sind und einen ersten Spalt begrenzen, wobei der erste Teilschenkel mit der Dichtlippe verbunden ist und wobei der erste und der zweite Teilschenkel durch eine Verbindungseinrichtung aus einem gummielastischen Werkstoff aneinander festgelegt sind und wobei die Verbindungseinrichtung im Schnitt betrachtet, eine axiale Länge und eine radiale Höhe aufweist.

### Stand der Technik

Eine solche Dichtung und eine solche Dichtungsanordnung sind aus der DE 199 30 964 A1 bekannt.

Die Dichtung ist als radialbewegliche Kolbenstangendichtung ausgebildet und gelangt zur Abdichtung hydraulischer, pneumatischer oder hydropneumatischer Aggregate zur Anwendung.

Eine abzudichtende Kolbenstange ist in einer in einem Gehäuse befindlichen Kolbenstangenführung geführt und durch die Kolbenstangendichtung nach außen zur Umgebung hin abgedichtet. Die Kolbenstangendichtung umfasst gehäuseseitig ein statisches Dichtungsteil und kolbenstangenseitig ein dynamisches Dichtungsteil, das über wenigstens eine Dichtlippe mit der Außenumfangsfläche der Kolbenstange dichtend zusammenwirkt. Zwischen dem statischen Dichtungsteil und dem dynamischen Dichtungsteil ist eine mit geringer Kraft radial auslenkbare Verbindungseinrichtung vorgesehen, die druckdicht mit den Dichtungsteilen verbunden ist.

Bei Stoßdämpfern für Kraftfahrzeuge entstehen betriebsbedingt radiale Auslenkbewegungen der Kolbenstange, zum Beispiel durch Biegung der Kolbenstange infolge von Querkräften.

Damit zur Reduzierung der Reibung die Anpresskraft zwischen der dynamisch beanspruchten Dichtlippe der Dichtung und der Kolbenstange möglichst gering gehalten werden kann, ist eine leichtgängige radiale Beweglichkeit der dynamisch beanspruchten Dichtlippe bei geringster Radialkraft erwünscht. Hierzu ist die Verbindungseinrichtung zwischen dem statischen Dichtungsteil und dem dynamischen Dichtungsteil vorgesehen, die in radialer Richtung möglichst frei beweglich ist und außerdem eine dichte Verbindung der Dichtungsteile gewährleisten soll.

Die Verbindungseinrichtung ist in Form einer rollbalgartig dünn ausgebildeten Elastomerfalte ausgeführt, die in radialer Richtung leichtgängig beweglich ist. Die maximale radiale Beweglichkeit der Elastomerfalte ist größer bemessen als die maximal auftretende Auslenkung der abzudichtenden Kolbenstange in derselben Richtung.

Eine weitere Dichtung mit den Merkmalen aus dem Oberbegriff von Patentanspruch 1 ist aus der EP 1 909 002 A1 bekannt.

Weitere Dichtungsanordnungen sind aus der JP 2011-158035 A und der US 2 797 938 A bekannt.

Daraus ist jeweils eine Dichtung bekannt, umfassend einen Dichtring mit zumindest einer dynamisch beanspruchten Dichtlippe und einem Stützring aus einem zähharten Werkstoff, wobei der Dichtring und der Stützring miteinander verbunden sind, wobei der Stützring einen Radialschenkel umfasst, an dem in radialer Richtung einerseits die Dichtlippe festgelegt ist, wobei der Radialschenkel zweiteilig ausgebildet ist und einen in radialer Richtung einerseits angeordneten ersten Teilschenkel und einen in radialer Richtung andererseits angeordneten zweiten Teilschenkel aufweist, wobei sich die Teilschenkel mit einem ersten radialen Abstand benachbart zugeordnet sind und einen ersten Spalt begrenzen, wobei der erste Teilschenkel mit der Dichtlippe verbunden ist und wobei der erste und der zweite Teilschenkel durch eine Verbindungseinrichtung aus einem gummielastischen Werkstoff aneinander festgelegt sind. In der JP 2011-158035 A ist die Verbindungseinrichtung durch eine im Schnitt der Dichtung betrachtet schräg verlaufende Gummispur gebildet, deren in axialer Richtung verlaufende Länge wesentlich größer als deren radiale Dicke ist. Der erste Spalt ist von der Gummispur vollständig ausgefüllt.

Die Verbindungseinrichtung der Dichtung aus der US 2 797 938 A erstreckt sich in radialer Richtung und hat, bezogen auf eine Ausnehmung in einem Gehäuse, ein Übermaß. Während der bestimmungsgemäßen Verwendung der Dichtung berührt die Verbindungseinrichtung eine die Ausnehmung begrenzende Wandung des Gehäuses unter radialer Vorspannung dichtend.

### Darstellung der Erfindung

Der Erfindung liegt die Aufgabe zugrunde, eine Dichtung und eine Dichtungsanordnung der eingangs genannten Art derart weiterzuentwickeln, dass sie insgesamt robuster ausgebildet sind, insbesondere dass sie zur dauerhaften Abdichtung höherer Drücke zur Anwendung gelangen können, ohne dass die Verbindungseinrichtung beschädigt oder zerstört wird und dass eine reibungsbehaftete Relativbewegung der Verbindungseinrichtung zu axial angrenzenden Bauteilen vermieden wird.

Diese Aufgabe wird durch eine Dichtung gemäß Anspruch 1 und eine Dichtungsanordnung gemäß Anspruch 12 gelöst.
Auf vorteilhafte Ausgestaltungen nehmen die auf die genannten Ansprüche rückbezogenen Ansprüche Bezug.

Zur Lösung der Aufgabe ist es vorgesehen, dass die axiale Länge im Wesentlichen der radialen Höhe entspricht dass der Dichtring zumindest eine statisch beanspruchte Dichtung umfasst, dass die statisch beanspruchte Dichtung einen ersten und einen zweiten Dichtwulst umfasst, die sich mit einem zweiten radialen Abstand benachbart zugeordnet sind und dass der durch den zweiten radialen Abstand gebildete zweite Spalt im Wesentlichen frei vom Werkstoff der statisch beanspruchten Dichtung ist und dass der erste Spalt und der zweite Spalt jeweils einen im Wesentlichen übereinstimmenden Durchmesser aufweisen.

Außerdem ist zur Lösung der Aufgabe eine Dichtungsanordnung vorgesehen, umfassend eine Dichtung wie zuvor beschrieben und ein abzudichtendes erstes Maschinenelement, das von einem zweiten Maschinenelement mit einem dritten radialen Abstand umschlossen ist, wobei in dem durch den dritten radialen Abstand gebildeten dritten Spalt die Dichtung angeordnet ist.

Hierbei ist von Vorteil, dass die Dichtung und die Dichtungsanordnung durch die erfindungsgemäße Ausgestaltung der Verbindungseinrichtung insgesamt robust ausgebildet sind und auch hohe abzudichtende Drücke, wie sie beispielsweise in Stoßdämpfern von Kraftfahrzeugen auftreten, dauerhaft abdichten können.

Der Dichtring umfasst zumindest eine statisch beanspruchte Dichtung. Die statisch beanspruchte Dichtung ist üblicherweise auf der der Dichtlippe radial abgewandten Seite am Stützring festgelegt und dichtet ein Gehäuse, beispielsweise einen Deckel eines Stoßdämpfers, statisch gegenüber der Umgebung ab.

Die statisch beanspruchte Dichtung umfasst einen ersten und einen zweiten Dichtwulst, die sich mit einem zweiten radialen Abstand benachbart zugeordnet sind, wobei der durch den zweiten radialen Abstand gebildete zweite Spalt im Wesentlichen frei vom Werkstoff der statisch beanspruchten Dichtung ist. Die beiden Dichtwulste dichten den Einbauraum im Gehäuse statisch ab.

Der erste Spalt und der zweite Spalt weisen jeweils einen im Wesentlichen übereinstimmenden Durchmesser auf.
Es ist von hervorzuhebendem Vorteil, wenn der erste Spalt und der zweite Spalt jeweils eine im Wesentlichen übereinstimmende radiale Weite aufweisen.

Hierbei ist von Vorteil, dass die Verbindungseinrichtung in axialer Richtung frei zwischen dem ersten und dem zweiten Spalt angeordnet ist und in axialer Richtung weder die Teilschenkel noch zum Beispiel den Deckel des Gehäuses anliegend berührt. Eine betriebsbedingte radiale Stauchung der Verbindungseinrichtung ist gut möglich, weil der Werkstoff der gestauchten Verbindungseinrichtung in beide axiale Richtungen ungehindert ausweichen kann. Verlagerungen der beiden Teilschenkel in radialer Richtung relativ zueinander haben lediglich eine Stauchung und eine anschließende entsprechende Ausdehnung, jeweils in radialer Richtung, zur Folge. Eine reibungsbehaftete Relativbewegung der Verbindungseinrichtung zu axial angrenzenden Teilen erfolgt nicht.
Während der bestimmungsgemäßen Verwendung der Dichtung ist diese bevorzugt mit in radialer Richtung vorgespannter Verbindungseinrichtung innerhalb ihres Einbauraums angeordnet. Auch bei Radialverlagerungen der beiden Teilschenkel relativ zueinander sind gebrauchsdauerverringernde Zugspannungen in der Verbindungseinrichtung dadurch ausgeschlossen.

Die Verbindungseinrichtung weist, im Schnitt betrachtet, einen im Wesentlichen quadratischen Querschnitt auf. Dadurch kann die Verbindungseinrichtung höhere Drücke, wie sie beispielsweise in Stoßdämpfern von Kraftfahrzeugen entstehen, während einer langen Gebrauchsdauer problemlos abdichten. Auch auftretende Druckspitzen, die auf die robuste Verbindungseinrichtung einwirken, können deren lange Haltbarkeit nicht beeinträchtigen.

Durch die gummielastische Verbindungseinrichtung können zum Beispiel herstellungs- oder montagebedingte Toleranzen der Dichtung oder der Dichtungsanordnung gut ausgeglichen werden, ebenso wie Querkräfte, die betriebsbedingt auf die Dichtung einwirken.
Die radiale Beweglichkeit der Verbindungseinrichtung und damit der Dichtlippe ist für normale Anwendungsfälle ausreichend gut. Durch die gummielastische Nachgiebigkeit der Verbindungseinrichtung in radialer Richtung berührt die Dichtlippe das abzudichtende Maschinenelement trotz der robust ausgebildeten Verbindungseinrichtung mit ausreichend geringem Anpressdruck, so dass die Dichtung das abzudichtende Maschinenelement mit nur geringer Dichtungsreibung und trotzdem zuverlässig dichtend umschließt.

Die Verbindungseinrichtung kann einen einstückigen Bestandteil der statisch beanspruchten Dichtung bilden. Hierbei ist von Vorteil, dass die Dichtung dadurch insgesamt einfach und kostengünstig herstellbar ist.

Der durch den ersten radialen Abstand gebildete erste Spalt ist bevorzugt im Wesentlichen frei vom Werkstoff der Verbindungseinrichtung. Da gummielastische Werkstoffe per Definition inkompressibel sind, eine ausreichende radiale Nachgiebigkeit des ersten Teilschenkels mit der daran befindlichen Dichtlippe bezogen auf den zweiten Teilschenkel dennoch gegeben sein soll, ist eine solche Ausgestaltung von Vorteil. Durch den werkstoff-freien ersten Spalt weisen die beiden Teilschenkel des Radialschenkels eine ausreichend große Nachgiebigkeit in radialer Richtung relativ zueinander auf.

Die Verbindungseinrichtung befindet sich, obwohl sie die beiden Teilschenkel miteinander verbindet und die Teilschenkel in einer gemeinsamen Radialebene angeordnet sind, in axialer Richtung außerhalb des ersten Spalts.

Die Verbindungseinrichtung ist bevorzugt auf der der Dichtlippe in axialer Richtung abgewandten Seite des Radialschenkels angeordnet und überdeckt die entsprechende Stirnseite des ersten Spalts in radialer Richtung.

Auf der der Dichtlippe axial abgewandten Seite des Radialschenkels kann eine Vorschaltdichtung für die Dichtlippe angeordnet sein. Diese Vorschaltdichtung schützt die Dichtlippe vor einer Beaufschlagung mit Verunreinigungen aus der Umgebung. Der Verschleiß der Dichtlippe ist dadurch auch dann auf ein Minimum reduziert, wenn die Dichtung in einer stark verunreinigten Umgebung, beispielsweise in Stoßdämpfern von Baustellenfahrzeugen, zur Anwendung gelangt.

Bedarfsweise kann in axialer Richtung zwischen der Dichtlippe und der Vorschaltdichtung ein mit einem Sperrfett befülltes Schmiermittelreservoir angeordnet sein. Dichtlippe und Vorschaltdichtung werden dadurch besser geschmiert, und Verunreinigungen werden noch besser von der dynamisch beanspruchten Dichtlippe ferngehalten.

Die Vorschaltdichtung und die Dichtlippe können einstückig ineinander übergehend und materialeinheitlich ausgebildet sein. Auch dadurch wird eine einfache und kostengünstige Herstellbarkeit der Dichtung begünstigt.

Die statische Dichtung und die Vorschaltdichtung können einstückig ineinander übergehend und materialeinheitlich ausgebildet sein.

Die einfachste und kostengünstigste Herstellbarkeit weist die Dichtung dann auf, wenn die statische Dichtung, die Verbindungseinrichtung, die Vorschaltdichtung und die Dichtlippe einstückig ineinander übergehend und materialeinheitlich ausgebildet sind. In einem solchen Fall besteht die Dichtung im Wesentlichen nur aus dem zweiteilig ausgebildeten Radialschenkel mit erstem und zweitem Teilschenkel und aus den Bauteilen, die aus gummielastischem Werkstoff bestehen, nämlich der statischen Dichtung, der Verbindungseinrichtung, der Vorschaltdichtung und der Dichtlippe, die an den Radialschenkel angespritzt sind.

Gemäß einer vorteilhaften Ausgestaltung kann es vorgesehen sein, dass der zweite Teilschenkel den ersten Teilschenkel radial außenumfangseitig umschließt und einen Axialschenkel aufweist. Die Dichtung ist dann radial innendichtend ausgebildet und kann als Stoßdämpferdichtung zur Abdichtung von Kolbenstangen zur Anwendung gelangen.

Der Axialschenkel ist bevorzugt axial entgegen der Dichtlippe vorstehend ausgebildet. Hierbei ist von Vorteil, dass der zweite Teilschenkel mit seinem Axialschenkel einen Axialkraft-Begrenzer für die statisch beanspruchte Dichtung im Einbauraum bildet. Im eingebauten Zustand der Dichtung wird diese im Einbauraum so lange in axialer Richtung, zum Beispiel durch einen umgebördelten Deckel eines Stoßdämpfergehäuses, verpresst, bis das Gehäuse den Axialschenkel anliegend berührt. Eine weitere Verpressung in axialer Richtung ist dann nicht mehr möglich. Die axiale Anpresskraft der statisch beanspruchten Dichtung ist dadurch begrenzt, und unerwünscht hohe mechanische Beanspruchungen, die die Gebrauchsdauer verringern könnten, werden vermieden.

Außerdem betrifft die Erfindung eine Dichtungsanordnung, umfassend eine Dichtung, wie zuvor beschrieben und ein abzudichtendes erstes Maschinenelement, das von einem zweiten Maschinenelement mit einem dritten radialen Abstand umschlossen ist, wobei in dem durch den dritten radialen Abstand gebildeten dritten Spalt die Dichtung angeordnet ist.

Das erste Maschinenelement kann als abzudichtende Stange oder Welle, das zweite Maschinenelement als Gehäuse ausgebildet sein.
Die Dichtung kann zum Beispiel zur Abdichtung eines Stoßdämpfers zur Anwendung gelangen. In einem solchen Fall ist das erste Maschinenelement als abzudichtende Kolbenstange ausgebildet, die sich in einem abzudichtenden Gehäuse in axialer Richtung translatorisch hin und her bewegt.
Durch die Verbindungseinrichtung können, wie eingangs beschrieben, herstellungs- oder montagebedingte Toleranzen ausgeglichen und betriebsbedingt in die Dichtungsanordnung eingeleitete Querkräfte aufgenommen werden.

Das Gehäuse kann einen nutförmigen Einbauraum für die Dichtung begrenzen, wobei die statisch beanspruchte Dichtung und der Radialschenkel eine den Einbauraum begrenzende Wandung des Gehäuses anliegend berühren.
Der zweite Teilschenkel bildet mit seinem Axialschenkel einen Axialkraft-Begrenzer für die statisch beanspruchte Dichtung im Einbauraum. Die Montage der Dichtungsanordnung erfolgt derart, dass zum Beispiel ein rohrförmiges Gehäuse zur Anwendung gelangt, das um den Axialschenkel des zweiten Teilschenkels radial nach innen umgebördelt wird. Dadurch ist einerseits eine statische Abdichtung des Innenraums des Gehäuses gegenüber der Umgebung gewährleistet, und andererseits wird durch den unmittelbaren Kontakt des Axialschenkels mit dem umgebördelten Gehäuse eine unerwünscht starke axiale Verpressung der statischen Dichtung verhindert.

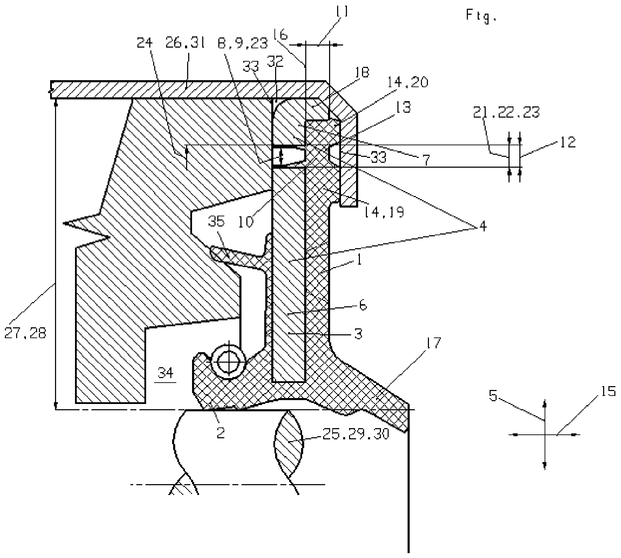

### Kurzbeschreibung der Zeichnung

Ein Ausführungsbeispiel der erfindungsgemäßen Dichtung in einem Ausführungsbeispiel der erfindungsgemäßen Dichtungsanordnung wird nachfolgend anhand der Figur näher beschrieben.

### Ausführung der Erfindung

Die Figur zeigt einen Ausschnitt der Dichtungsanordnung aus einem Stoßdämpfer im Bereich seines Deckels in schematischer Darstellung.

Das abzudichtende erste Maschinenelement 25 ist in diesem Ausführungsbeispiel als abzudichtende Kolbenstange 29 eines Stoßdämpfers ausgebildet und bewegt sich innerhalb des zweiten Maschinenelements 26, das durch das Gehäuse 31 des Stoßdämpfers gebildet ist, in axialer Richtung 15 translatorisch hin und her. Innerhalb des Gehäuses 31 ist der im Wesentlichen nutförmige Einbauraum 32 für die Dichtung 1 vorgesehen, der in radialer Richtung 5 nach innen offen ist.

Der Dichtring 1 weist den Radialschenkel 4 auf, der zweiteilig ausgebildet ist und den radial innen angeordneten ersten Teilschenkel 6 und den radial außen angeordneten zweiten Teilschenkel 7 umfasst. Der radial außen angeordnete zweite Teilschenkel 7 weist radial außenumfangsseitig einen axial entgegen dem abzudichtenden Raum 34 abgewinkelten Axialschenkel 18 auf, der bei Montage der Dichtungsanordnung für eine Axialkraftbegrenzung auf die statisch beanspruchte Dichtung 14 im Einbauraum 32 sorgt.
Auf der dem abzudichtenden Raum 34 axial abgewandten Seite des Dichtrings 1 ist das Gehäuse 31 in radialer Richtung nach innen umgebördelt. Durch den Axialschenkel 18 des zweiten Teilschenkels 7 ist die statisch beanspruchte Dichtung 14 vor eine unerwünscht großen Verpressung in axialer Richtung 15 und dadurch vor einer möglichen Beschädigung geschützt.

Am zweiteilig ausgebildeten Radialschenkel 4 sind radial innenseitig die Dichtlippe 2 und die Vorschaltdichtung 17 angeordnet, radial außenseitig der erste 19 und der zweite Dichtwulst 20, die jeweils einen Bestandteil der statisch beanspruchten Dichtung 14 bilden. Außerdem ist im hier gezeigten Ausführungsbeispiel eine statisch beanspruchte Zusatzdichtlippe 35 vorgesehen, die den beiden Dichtwulsten 19, 20 in Richtung des abzudichtenden Raums 34 funktionstechnisch vorgeschaltet ist.

Der Dichtring 1 weist einen besonders teilarmen Aufbau auf, weil die Dichtlippe 2, die Vorschaltdichtung 17, die statisch beanspruchte Dichtung 14 mit ihren beiden Dichtwulsten 19, 20 und die Zusatzdichtlippe 35 einstückig ineinander übergehend und materialeinheitlich ausgebildet sind. Ebenfalls einstückig ineinander übergehend und materialeinheitlich mit den zuvor beschriebenen Dichtungen ausgebildet ist die Verbindungseinrichtung 10, die aus einem gummielastischen, hier demselben gummielastischen Werkstoff besteht und, im hier dargestellten Schnitt betrachtet, einem im wesentlichen quadratischen Querschnitt 13 aufweist. Die axiale Länge 11 und die radiale Höhe 12 sind im Wesentlichen gleich. Durch diese kompakte Bauform kann die Verbindungseinrichtung auch mit vergleichsweise hohen Drücken oder Druckspitzen beaufschlagt werden, wie sie zum Beispiel in Stoßdämpfern auftreten. Der Dichtring weist dadurch gleichbleibend gute Gebrauchseigenschaften während einer langen Gebrauchsdauer unter allen Betriebsbedingungen auf.

Die Verbindungseinrichtung 10 verbindet die beiden Teilschenkel 6, 7 in radialer Richtung elastisch nachgiebig. Dazu ist die Verbindungseinrichtung 10 in axialer Richtung 15 außerhalb des ersten Spalts 9 angeordnet, der durch den ersten radialen Abstand 8 zwischen den beiden Teilschenkeln 6, 7 gebildet ist. Der erste Spalt 9 zwischen den Teilschenkeln 6, 7 ist im Wesentlichen frei vom Werkstoff der Verbindungseinrichtung 10.

Die Verbindungseinrichtung 10 ist, in axialer Richtung 15 betrachtet, zwischen dem Radialschenkel 4 und den Dichtwulsten 19, 20 der statisch beanspruchten Dichtung 14 angeordnet. Die Verbindungseinrichtung 10 hat die Form eines sich in radialer Richtung 5 erstreckenden Stegs.

Der erste Spalt 9 und der zweite Spalt 22 haben jeweils im Wesentlichen eine übereinstimmende radiale Weite 23 und übereinstimmende Durchmesser 24.

Das Gehäuse 31 umschließt die abzudichtende Kolbenstange 29 mit dem dritten radialen Abstand 27, wobei in dem durch den dritten radialen Abstand 27 gebildeten dritten Spalt 28 die erfindungsgemäße Dichtung 1 angeordnet ist.

## Patentansprüche

1. Dichtung, umfassend einen Dichtring (1) mit zumindest einer dynamisch beanspruchten Dichtlippe (2) und einem Stützring (3) aus einem zähharten Werkstoff, wobei der Dichtring (1) und der Stützring (3) miteinander verbunden sind, wobei der Stützring (3) einen Radialschenkel (4) umfasst, an dem in radialer Richtung (5) einerseits die Dichtlippe (2) festgelegt ist, wobei der Radialschenkel (4) zweiteilig ausgebildet ist und einen in radialer Richtung (5) einerseits angeordneten ersten Teilschenkel (6) und einen in radialer Richtung (5) andererseits angeordneten zweiten Teilschenkel (7) aufweist, wobei sich die Teilschenkel (6, 7) mit einem ersten radialen Abstand (8) benachbart zugeordnet sind und einen ersten Spalt (9) begrenzen, wobei der erste Teilschenkel (6) mit der Dichtlippe (2) verbunden ist, wobei der erste (6) und der zweite Teilschenkel (7) durch eine Verbindungseinrichtung (10) aus einem gummielastischen Werkstoff aneinander festgelegt sind und wobei die Verbindungseinrichtung (10), im Schnitt betrachtet, eine axiale Länge (11) und eine radiale Höhe (12) aufweist, **dadurch gekennzeichnet, dass** die axiale Länge (11) im Wesentlichen der radialen Höhe (12) entspricht, dass der Dichtring (1) zumindest eine statisch beanspruchte Dichtung (14) umfasst, dass die statisch beanspruchte Dichtung (14) einen ersten (19) und einen zweiten Dichtwulst (20) umfasst, die sich mit einem zweiten radialen Abstand (21) benachbart zugeordnet sind und dass der durch den zweiten radialen Abstand (21) gebildete zweite Spalt (22) im Wesentlichen frei vom Werkstoff der statisch beanspruchten Dichtung (14) ist und dass der erste Spalt (9) und der zweite Spalt (22) jeweils einen im Wesentlichen übereinstimmenden Durchmesser (24) aufweisen.

2. Dichtung nach Anspruch 1, **dadurch gekennzeichnet, dass** der erste Spalt (9) und der zweite Spalt (22) jeweils eine im Wesentlichen übereinstimmende radiale Weite (23) aufweisen.

3. Dichtung nach einem der Ansprüche 1 oder 2, **dadurch gekennzeichnet, dass** die Verbindungseinrichtung (10), im Schnitt betrachtet, einen im Wesentlichen quadratischen Querschnitt (13) aufweist.

4. Dichtung nach einem der Ansprüche 1 bis 3, **dadurch gekennzeichnet, dass** die Verbindungseinrichtung (10) einen einstückigen Bestandteil der statisch beanspruchten Dichtung (14) bildet.

5. Dichtung nach einem der Ansprüche 1 bis 4, **dadurch gekennzeichnet, dass** der durch den ersten radialen Abstand (8) gebildete erste Spalt (9) im Wesentlichen frei vom Werkstoff der Verbindungseinrichtung (10) ist.

6. Dichtung nach einem der Ansprüche 1 bis 5, **dadurch gekennzeichnet, dass** die Verbindungseinrichtung (10) auf der der Dichtlippe (2) in axialer Richtung (15) abgewandten Seite des Radialschenkels (4) angeordnet ist und die entsprechende Stirnseite (16) des ersten Spalts (9) in radialer Richtung (5) überdeckt.

7. Dichtung nach einem der Ansprüche 1 bis 6, **dadurch gekennzeichnet, dass** auf der der Dichtlippe (2) axial abgewandten Seite des Radialschenkels (4) eine Vorschaltdichtung (17) für die Dichtlippe (2) angeordnet ist.

8. Dichtung nach Anspruch 7, **dadurch gekennzeichnet, dass** die Vorschaltdichtung (17) und die Dichtlippe (2) einstückig ineinander übergehend und materialeinheitlich ausgebildet sind.

9. Dichtung nach einem der Ansprüche 1 bis 8, **dadurch gekennzeichnet, dass** die statische Dichtung (14) und die Vorschaltdichtung (17) einstückig ineinander übergehend und materialeinheitlich ausgebildet sind.

10. Dichtung nach einem der Ansprüche 1 bis 9, **dadurch gekennzeichnet, dass** der zweite Teilschenkel (7) den ersten Teilschenkel (6) radial außenumfangsseitig umschließt und einen Axialschenkel (18) aufweist.

11. Dichtung nach Anspruch 10, **dadurch gekennzeichnet, dass** der Axialschenkel (18) axial entgegen der Dichtlippe (2) vorstehend ausgebildet ist.

12. Dichtungsanordnung, umfassend eine Dichtung nach einem der Ansprüche 1 bis 11 und ein abzudichtendes erstes Maschinenelement (25), das von einem zweiten Maschinenelement (26) mit einem dritten radialen Abstand (27) umschlossen ist, wobei in dem durch den dritten radialen Abstand (27) gebildeten dritten Spalt (28) die Dichtung (1) angeordnet ist.

13. Dichtungsanordnung nach Anspruch 12, **dadurch gekennzeichnet, dass** das erste Maschinenelement (25) als abzudichtende Stange (29) oder Welle (30) und das zweite Maschinenelement (26) als Gehäuse (31) ausgebildet ist.

14. Dichtungsanordnung nach Anspruch 13, **dadurch gekennzeichnet, dass** das Gehäuse (31) einen nutförmigen Einbauraum (32) für die Dichtung (1) begrenzt und dass die statisch beanspruchte Dichtung (14) und der Radialschenkel (4) eine den Einbauraum (32) begrenzende Wandlung (33) des Gehäuses (31) anliegend berühren.

15. Dichtungsanordnung nach einem der Ansprüche 12 bis 14, **dadurch gekennzeichnet, dass** der zweite Teilschenkel (7) mit seinem Axialschenkel (18) einen Axialkraft-Begrenzer für die statisch beanspruchte Dichtung (14) im Einbauraum (32) bildet.

## Claims

1. Seal comprising a sealing ring (1) which has at least one dynamically stressed sealing lip (2) and has a support ring (3) composed of a tough-hard material, wherein the sealing ring (1) and the support ring (3) are connected to one another, wherein the support ring (3) comprises a radial limb (4) to which the sealing lip (2) is fixed at one side in the radial direction (5), wherein the radial limb (4) is of two-part form and has a first sub-limb (6), arranged at one side in the radial direction (5), and a second sub-limb (7), arranged at the other side in the radial direction (5), wherein the sub-limbs (6, 7) are assigned to one another in an adjacent manner and with a first radial spacing (8) and delimit a first gap (9), wherein the first sub-limb (6) is connected to the sealing lip (2), wherein the first (6) and the second sub-limb (7) are fixed to one another by a connecting device (10) composed of a rubber-elastic material, and wherein the connecting device (10), as viewed in section, has an axial length (11) and a radial height (12), **characterized in that** the axial length (11) corresponds substantially to the radial height (12), **in that** the sealing ring (1) comprises at least one statically stressed seal (14), **in that** the statically stressed seal (14) comprises a first (19) and a second sealing bead (20), which are assigned to one another in an adjacent manner and with a second radial spacing (21), and **in that** the second gap (22), formed by the second radial spacing (21), is substantially free of the material of the statically stressed seal (14), and **in that** the first gap (9) and the second gap (22) each have a substantially corresponding diameter (24).

2. Seal according to Claim 1, **characterized in that** the first gap (9) and the second gap (22) each have a substantially corresponding radial width (23).

3. Seal according to one of Claims 1 or 2, **characterized in that** the connecting device (10), as viewed in section, has a substantially square cross section (13).

4. Seal according to one of Claims 1 to 3, **characterized in that** the connecting device (10) forms an integral constituent part of the statically stressed seal (14).

5. Seal according to one of Claims 1 to 4, **characterized in that** the first gap (9), formed by the first radial spacing (8), is substantially free of the material of the connecting device (10).

6. Seal according to one of Claims 1 to 5, **characterized in that** the connecting device (10) is arranged on that side of the radial limb (4) which is averted from the sealing lip (2) in the axial direction (15), and covers the corresponding face side (16) of the first gap (9) in the radial direction (5).

7. Seal according to one of Claims 1 to 6, **characterized in that** a buffer seal (17) for the sealing lip (2) is arranged on that side of the radial limb (4) which is axially averted from the sealing lip (2).

8. Seal according to Claim 7, **characterized in that** the buffer seal (17) and the sealing lip (2) are formed such that they transition integrally into one another and are of one and the same material.

9. Seal according to one of Claims 1 to 8, **characterized in that** the static seal (14) and the buffer seal (17) are formed such that they transition integrally into one another and are of one and the same material.

10. Seal according to one of Claims 1 to 9, **characterized in that** the second sub-limb (7) surrounds the first sub-limb (6) radially at the outer circumferential side and has an axial limb (18) .

11. Seal according to Claim 10, **characterized in that** the axial limb (18) is formed so as to project axially counter to the sealing lip (2).

12. Seal arrangement comprising a seal according to one of Claims 1 to 11 and comprising a first machine element (25) to be sealed off, the latter being surrounded, with a third radial spacing (27), by a second machine element (26), wherein the seal (1) is arranged in the third gap (28), formed by the third radial spacing (27).

13. Seal arrangement according to Claim 12, **characterized in that** the first machine element (25) is in the form of a rod (29), or shaft (30), to be sealed off, and the second machine element (26) is in the form of a housing (31).

14. Seal arrangement according to Claim 13, **characterized in that** the housing (31) delimits a groove-like installation space (32) for the seal (1), and **in that** the statically stressed seal (14) and the radial limb (4) are in bearing contact with a wall (33), delimiting the installation space (32), of the housing (31).

15. Seal arrangement according to one of Claims 12 to 14, **characterized in that** the second sub-limb (7) forms, by way of its axial limb (18), an axial force-limiting means for the statically stressed seal (14) in the installation space (32).

## Revendications

1. Joint d'étanchéité, comprenant une bague d'étanchéité (1) pourvue d'au moins une lèvre d'étanchéité (2) sollicitée dynamiquement et une bague de support (3) en matière extra-rigide, la bague d'étanchéité (1) et la bague de support (3) étant reliées l'une à l'autre, la bague de support (3) comprenant une branche radiale (4) à laquelle la lèvre d'étanchéité (2) est fixée dans la direction radiale (5) d'une part, la branche radiale (4) étant conçue en deux parties et comportant une première partie de branche (6) disposée d'une part dans une direction radiale (5) et une deuxième partie de branche (7) disposée d'autre part dans une direction radiale (5), les parties de branche (6, 7) étant associées de manière adjacente à une première distance radiale (8) et délimitant un premier espace (9), la première partie de branche (6) étant reliée à la lèvre d'étanchéité (2), la première branche (6) et la deuxième branche (7) étant fixées l'une à l'autre par un dispositif de liaison (10) en matière élastique caoutchouteuse, et le dispositif de liaison (10), vu en coupe, ayant une longueur axiale (11) et une hauteur radiale (12), **caractérisé en ce que** la longueur axiale (11) correspond sensiblement à la hauteur radiale (12), **en ce que** la bague d'étanchéité (1) comprend au moins un joint d'étanchéité (14) sollicité statiquement, **en ce que** le joint d'étanchéité (14) sollicité statiquement comprend un premier bourrelet d'étanchéité (19) et un deuxième bourrelet d'étanchéité (20) qui sont associés de manière adjacente avec une deuxième distance radiale (21) et **en ce que** le deuxième espace (22) formé par la deuxième distance radiale (21) est sensiblement dépourvu de la matière du joint (14) sollicité statiquement et **en ce que** le premier espace (9) et le deuxième espace (22) ont chacun un diamètre (24) sensiblement correspondant.

2. Joint d'étanchéité selon la revendication 1, **caractérisé en ce que** le premier espace (9) et le deuxième espace (22) ont chacun une largeur radiale (23) sensiblement correspondante.

3. Joint d'étanchéité selon l'une quelconque des revendications 1 ou 2, **caractérisé en ce que** le dispositif de liaison (10), vu en coupe, a une section transversale (13) sensiblement carrée.

4. Joint d'étanchéité selon l'une quelconque des revendications 1 à 3, **caractérisé en ce que** le dispositif de liaison (10) fait partie intégrante du joint d'étanchéité (14) sollicité statiquement.

5. Joint d'étanchéité selon l'une quelconque des revendications 1 à 4, **caractérisé en ce que** le premier espace (9) formé par la première distance radiale (8) est sensiblement dépourvu de la matière du dispositif de liaison (10).

6. Joint d'étanchéité selon l'une quelconque des revendications 1 à 5, **caractérisé en ce que** le dispositif de liaison (10) est disposé du côté de la branche radiale (4) qui est opposé à la lèvre d'étanchéité (2) dans la direction axiale (15) et recouvre le côté frontal correspondant (16) du premier espace (9) dans la direction radiale (5).

7. Joint d'étanchéité selon l'une quelconque des revendications 1 à 6, **caractérisé en ce qu'**un joint d'étanchéité amont (17) de la lèvre d'étanchéité (2) est disposé du côté de la branche radiale (4) qui est opposé axialement à la lèvre d'étanchéité (2).

8. Joint d'étanchéité selon la revendication 7, **caractérisé en ce que** le joint d'étanchéité amont (17) et la lèvre d'étanchéité (2) sont formés d'une seule pièce en venue de matière.

9. Joint d'étanchéité selon l'une quelconque des revendications 1 à 8, **caractérisé en ce que** le joint d'étanchéité statique (14) et le joint d'étanchéité amont (17) sont formés d'une seule pièce en venue de matière.

10. Joint d'étanchéité selon l'une quelconque des revendications 1 à 9, **caractérisé en ce que** la deuxième partie de branche (7) enserre la première partie de branche (6) radialement du côté périphérique extérieur et comporte une branche axiale (18).

11. Joint d'étanchéité selon la revendication 10, **caractérisé en ce que** la branche axiale (18) est formée axialement de manière à faire saillie dans la direction opposée à la lèvre d'étanchéité (2).

12. Ensemble d'étanchéité comprenant un joint d'étanchéité selon l'une des revendications 1 à 11 et un premier élément de machine (25) à étanchéifier qui est enfermé par un deuxième élément de machine (26) à une troisième distance radiale (27), le joint d'étanchéité (1) étant disposé dans le troisième espace (28) formé par la troisième distance radiale (27).

13. Dispositif d'étanchéité selon la revendication 12, **caractérisé en ce que** le premier élément de machine (25) est réalisé sous la forme d'une tige (29) ou d'un arbre (30) à étanchéifier et le deuxième élément de machine (26) est réalisé sous la forme d'un boîtier (31) .

14. Ensemble d'étanchéité selon la revendication 13, **caractérisé en ce que** le boîtier (31) délimite un espace de montage (32) en forme de rainure destiné au joint d'étanchéité (1) et **en ce que** le joint d'étanchéité (14) sollicité statiquement et la branche radiale (4) viennent en appui sur une paroi (33) du boîtier (31) qui délimite un espace de montage (32).

15. Ensemble d'étanchéité selon l'une quelconque des revendications 12 à 14, **caractérisé en ce que** la deuxième partie de branche (7) forme avec sa branche axiale (18) un limiteur d'effort axial destiné au joint d'étanchéité (14), sollicité statiquement, dans l'espace de montage (32).
